# EUROPEAN PATENT APPLICATION

(11) **EP 2 348 232 A1**
(43) Date of publication of application: **27.07.2011**
(21) Application number: 10009882.1
(22) Date of filing: 18.09.2010
(51) Int. Cl.: F16H 57/04

(54) **Vehicle hydraulic control unit**

(30) Priority: 21.01.2010 JP 2010011420
(71) Applicant: Showa Corporation, Gyoda-shi, Saitama (JP); Honda Motor Co., Ltd., Minato-ku Tokyo (JP)
(72) Inventor: Taga, Naoya, Haga-gun Tochigi (JP); Tanaka, Tomohiro, Haga-gun Tochigi (JP); Takano, Masayoshi, Haga-gun Tochigi (JP); Ishikawa, Tomoaki, Wako-shi Saitama (JP); Kawai, Hikaru, Wako-shi Saitama (JP); Nakano, Shigeji, Wako-shi Saitama (JP); Tojo, Katsuki, Wako-shi Saitama (JP); Oyama, Eiji, Wako-shi Saitama (JP)
(74) Representative: Twelmeier Mommer & Partner

(57) **Abstract**

A vehicle hydraulic control unit capable of preventing a vane from being pulled into a vane groove when a vane pump driven by an engine stops. The present hydraulic control unit supplies discharge oil in an external pump to a vane back pressure chamber of a vane pump, when an engine stops.

## Description

### BACKGROUND OF THE INVENTION

The present invention relates to a vehicle hydraulic control unit using a vane pump that is driven by an engine.

For example, Japanese Patent Application Laid-Open No. 2001-108084 (Patent Document 1) discloses a hydraulic control unit for a vehicle using a vane pump that is driven by an engine. The conventional vehicle hydraulic control unit supplies discharge oil pressure from a vane, which is driven by an engine, to a continuously variable transmission (CVT) that shifts output rotation of the engine.

In the conventional vehicle hydraulic control unit, the vane pump accommodates vanes, which can protrude to or retract from a great number of vane grooves formed radially on a rotor that is mounted to a pump shaft, wherein a cam ring surrounds the rotor and the vanes to define a pump chamber. A side plate provided along the cam ring is provided so as to communicate a discharge port corresponding to a discharge-side pump chamber and a vane back pressure supplying port corresponding to a vane back pressure chamber at the center of the vane groove with each other. The leading end of the vane is pressed against the inner peripheral guide surface of the cam ring by centrifugal force caused by the rotation of the rotor and the back pressure supplied to the vane back pressure chamber, whereby the pump chamber is defined and formed.

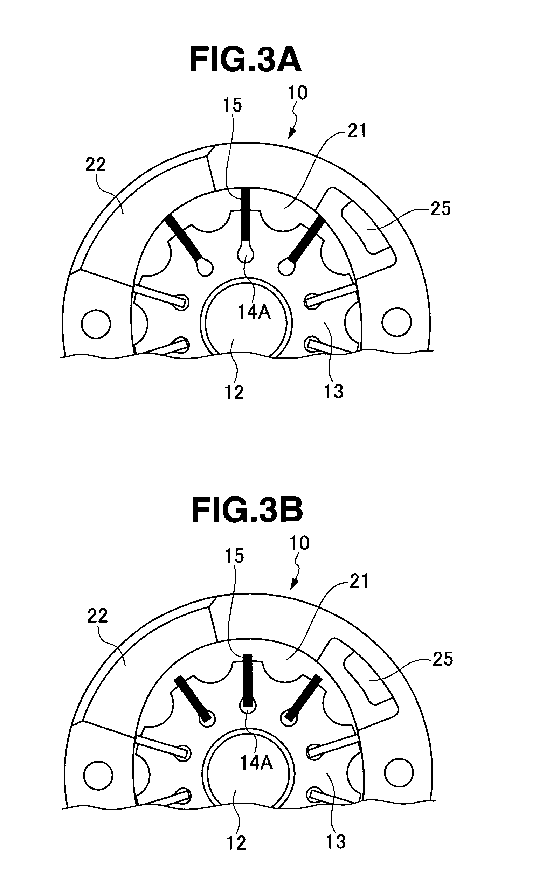

In the conventional vehicle hydraulic control unit, when a vehicle temporarily stops, and the rotation of the engine stops, the rotation of the vane pump driven by the engine also stops to discontinue the discharge of the hydraulic fluid. With this, the centrifugal force exerted on the engine and the back pressure supplied to the vane back pressure chamber are eliminated, whereby the vane that is located at a fixed angular position of the rotor is pulled into the vane groove by own weight (later-described FIG. 3B).

Accordingly, hydraulic fluid supplied to the vane back pressure chamber might be leaked out from the discharge port, or the hydraulic fluid sucked into the pump chamber might be leaked out from a suction port or the discharge port. Since the hydraulic fluid in the vane back pressure chamber or in the pump chamber is eliminated, self-priming performance of the hydraulic fluid to the pump chamber and discharge response of the hydraulic fluid from the pump chamber might be deteriorated upon the re-start of the vane pump, i.e., when the engine is started again.

An object of the present invention is to provide a vehicle hydraulic control unit capable of preventing a vane from being pulled into a vane groove, when a vane pump driven by an engine stops.

The present invention relate to a vehicle hydraulic control unit comprising a vane pump driven by an engine. The vane pump accommodates vanes in many vane grooves, which are radially formed on a rotor provided to a pump shaft, so as to be capable of protruding to or retracting from the vane grooves. A cam ring surrounds the rotor and the vanes to define a pump chamber, and discharge oil from the pump chamber is supplied to a center-side vane back pressure chamber in the vane groove. The discharge oil from an external oil pressure supplying apparatus can be supplied to the vane back pressure chamber of the vane pump during the stopped state of the engine.

The present invention relate to a vehicle hydraulic control unit comprising a vane pump driven by an engine. The vane pump accommodates vanes in many vane grooves, which are radially formed on a rotor provided to a pump shaft, so as to be capable of protruding to or retracting from the vane grooves. A cam ring surrounds the rotor and the vanes to define a pump chamber. A side plate provided along the cam ring communicates a discharge port corresponding to a discharge-side pump chamber and a vane back pressure supplying port corresponding to a center-side vane back pressure chamber in the vane groove. The discharge oil from an external oil pressure supplying apparatus can be supplied to the discharge port of the vane pump during the stopped state of the engine.

The present invention will be more fully understood from the detailed description given below and from the accompanying drawings which should not be taken to be a limitation on the invention, but are for explanation and understanding only.

The drawings:
- FIG. 1: is a schematic circuit diagram illustrating a first embodiment of a vehicle hydraulic control unit;
- FIG. 2: is a circuit diagram illustrating an essential part in FIG. 1;
- FIGS. 3A and 3B: are schematic views illustrating a protruding and retracting state of the vane, wherein FIG. 3A is a schematic view illustrating an example according to the present invention, and FIG. 3B is a schematic view illustrating a conventional example;
- FIG. 4: is a sectional view illustrating a vane pump;
- FIG. 5: is a sectional view taken along a line V -V in FIG. 4;
- FIG. 6: is a schematic circuit diagram illustrating a second embodiment of a vehicle hydraulic control unit;
- FIG. 7: is a side view illustrating a modification of the vane pump;
- FIG. 8: is a sectional view taken along a line VIII - VIII in FIG. 7; and
- FIG. 9: is a sectional view taken along a line IX - IX in FIG. 7.

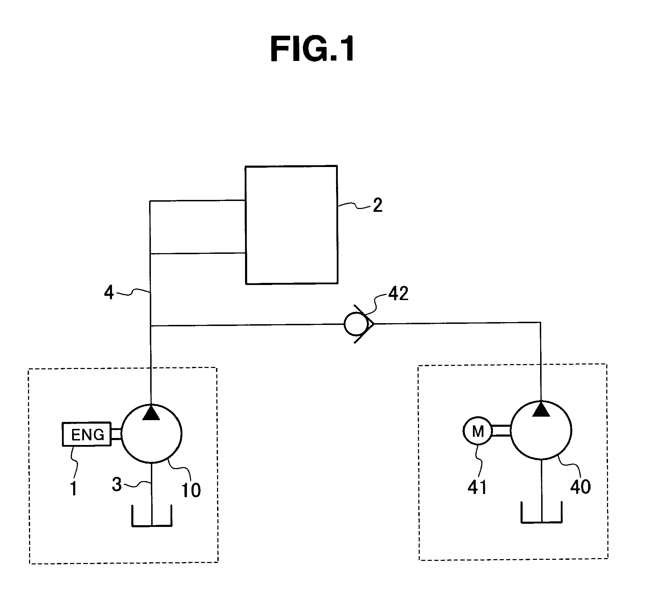

FIG. 1 illustrates a first embodiment of a vehicle hydraulic control unit according to the present invention. The vehicle hydraulic control unit includes a vane pump 10 that is driven by an engine 1, and controls, for example, a hydraulic control type continuously variable transmission (hereinafter referred to as CVT) 2 by a hydraulic fluid discharged from the vane pump 10. A suction pipe line 3 is connected to a suction opening (later-described suction opening 24) of the vane pump 10, and a discharge pipe line 4 is connected to a discharge opening (later-described discharge opening 28) of the vane pump 10.

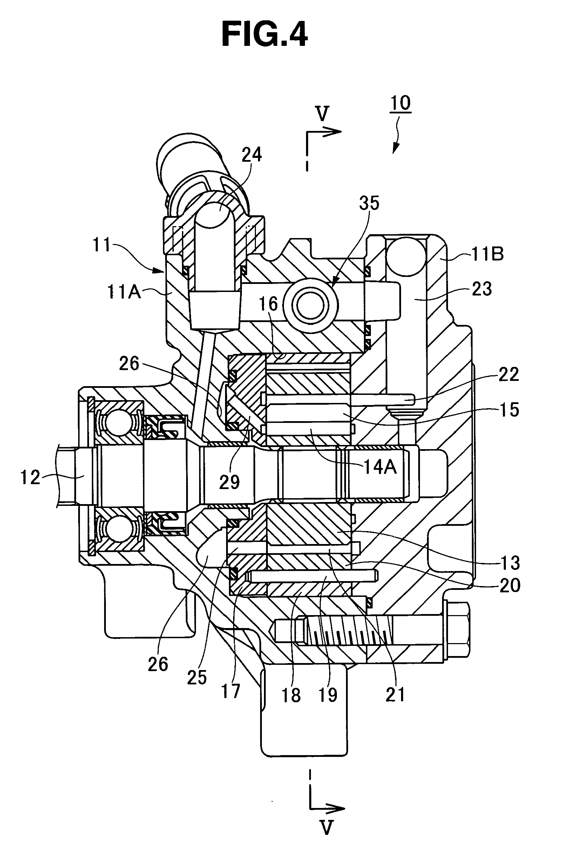

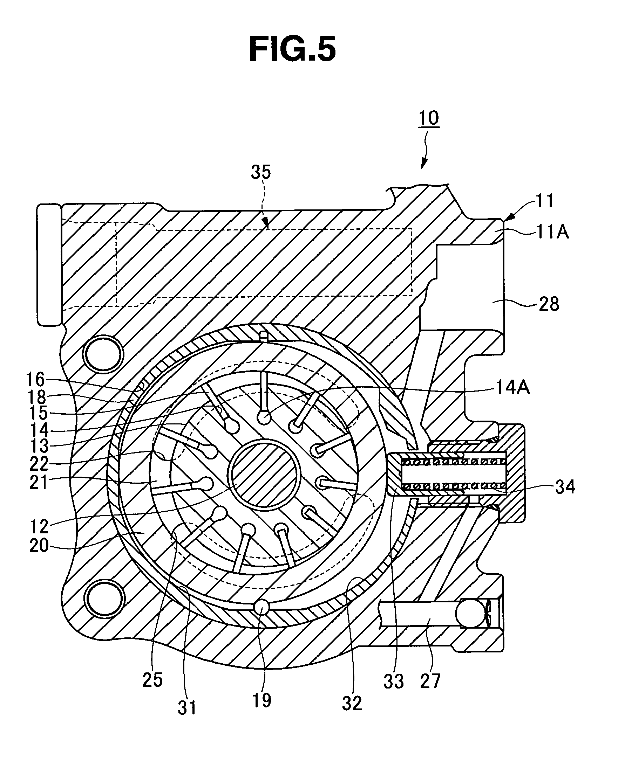

The vane pump 10 can be a variable capacity vane pump illustrated in FIGS. 4 and 5. The vane pump 10 has a rotor 13 that is fixed to a pump shaft 12, which is inserted into a pump casing 11, by a serration, and that is driven to rotate. The pump shaft 12 is directly driven to rotate by the engine 1. The rotor 13 accommodates vanes 15, which can protrude into or retract from a great number of vane grooves 14 that are radially formed at many respective positions in the circumferential direction of the rotor 13, wherein the rotor 13 can move each vane 15 in the radius direction along the vane grooves 14. A side plate 17 and an adapter ring 18 are fitted in a fitting hole 16 of a pump housing 11A of the pump casing 11 in a laminated state. They are positioned in the circumferential direction by a support pin 19, and fixed and held by a cover 11 B from the side.

A cam ring 20 is fitted to the above-mentioned adapter ring 18 fixed to the pump housing 11A of the pump casing 11. The cam ring 20 is supported by the support pin 19, which is provided at the lowermost part of the adapter ring 18 in the vertical direction, in such a manner that the cam ring 20 can be pivoted and displaced. The cam ring 20 encloses the rotor 13 and the vanes 15 with a certain eccentric amount with the rotor 13, thereby forming a pump chamber 21 between the outer periphery of the rotor 13 and the adjacent vanes 15 between the side plate 17 and the cover 11 B. A suction port 22 formed on the cover 11 B is open to the suction region at the upstream side of the pump chamber 21 in the rotating direction of the rotor. The suction port 22 is allowed to communicate with the suction opening 24 of the pump 10 through a suction passage (drain passage) 23 formed to the housing 11A and the cover 11 B. On the other hand, the discharge port 25 formed on the side plate 17 is open to the discharge region at the downstream side of the pump chamber 21 in the rotor-rotating direction. The discharge port 25 is allowed to communicate with the discharge opening 28 of the pump 10 through a high-pressure chamber 26 and a discharge passage 27 provided to the housing 11A.

The side plate 17 provided along one side of the cam ring 20 is provided with a vane back pressure supplying port 29 that guides a high-pressure discharge oil in the high-pressure chamber 26 to a vane back pressure chamber 14A of the vane groove 14 at the center of the rotor 13. Specifically, the side plate 17 is provided so as to communicate the discharge port 25 corresponding to the pump chamber 21 at the discharge side and the vane back pressure supplying port 29 corresponding to the center-side vane back pressure chamber 14A in the vane groove 14 with each other by the high-pressure chamber 26.

With this structure, in the vane pump 10, the rotor 13 is rotated by the engine 1, whereby each vane 15 rotates with the leading end thereof being pressed against the inner peripheral cam surface of the cam ring 20 due to the centrifugal force caused by the rotation of the rotor 13 and the back pressure supplied to the vane back pressure chamber 14A from the vane back pressure supplying port 29. In this case, at the upstream side of the pump chamber 21 in the rotating direction of the rotor, the volume formed between the adjacent vanes 15 and the cam ring 20 is increased with the rotation, whereby the hydraulic fluid is sucked from the suction port 22. At the downstream side of the pump chamber 21 in the rotating direction of the rotor, the volume formed between the adjacent vanes 15 and the cam ring 20 is decreased with the rotation, whereby the hydraulic fluid is discharged from the discharge port 25.

The vane pump 10 has first and second fluid pressure chambers 31 and 32 between the adapter ring 18 and the cam ring 20, and has a pressure cylinder 33 and a spring 34 at the side opposite to the first fluid pressure chamber 31 across the cam ring 20. Fluid pressures guided from the discharge passage of the pump 10 through a switching valve device 35 are supplied to the first fluid pressure chamber 31, the second fluid pressure chamber 32, and an oil chamber of the pressure cylinder 33. The cam ring 20 is moved against the biasing force of the spring 34 with the balance of these pressures to change the volume in the pump 21, whereby the discharge rate of the pump 10 is controlled.

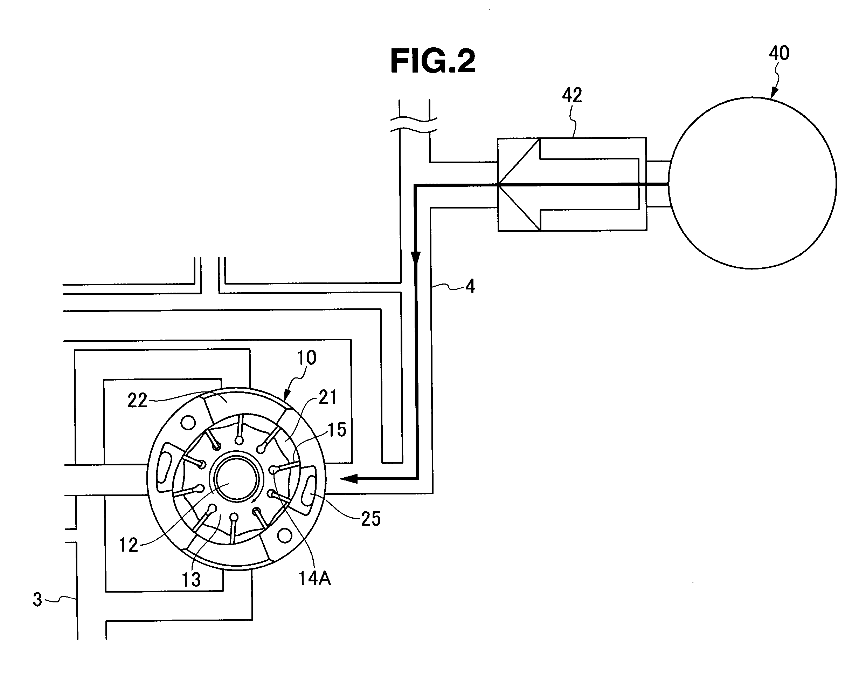

As illustrated in FIGS. 1 and 2, an external pump 40 serving as an external oil pressure supplying apparatus is connected to the discharge pipe line 4 that is connected to the discharge opening 28 of the vane pump 10 in the vehicle hydraulic control unit illustrated in FIG. 1. The external pump 40 is driven by an electric motor 41, whereby the discharge oil pressure in the external pump 40 is supplied to the discharge pipe line 4 of the vane pump 10 through a one-way valve 42 (in the present embodiment, a check valve). The one-way and check valves of the present invention are standard operation check valves in that they are not arranged to provide any damping in the open position, and are not designed to throttle fluid flow during the transition from open to closed, or closed to open.

Specifically, in the vehicle hydraulic control unit illustrated in FIG. 1, when a vehicle temporarily stops and the rotation of the engine 1 also stops, the rotation of the vane pump 10 driven by the engine 1 also stops to discontinue the discharge of the hydraulic fluid. When the temporal stop of the vehicle, the stop of the rotation of the engine 1, the stop of the rotation of the vane pump 10, or the reduction in the discharge oil pressure of the vane pump 10 is detected, an unillustrated controller drives the electric motor 41 to drive the external pump 40. Accordingly, during stoppage of the engine 1, the discharge oil pressure of the external pump 40 is supplied to the discharge pipe line 4 of the vane pump 10, the high-pressure chamber 26 of the vane pump 10, and the discharge port 25 through the one-way valve 42, and further, supplied to the vane back pressure supplying port 29 and the vane back pressure chamber 14A.

Accordingly, the operation and effect described below are provided by the present embodiment.
(a) In the vehicle hydraulic control unit using the vane pump 10 driven by the engine 1, the discharge oil in the external pump 40 can be supplied to the discharge port 25 of the vane pump 10 during the stop of the engine 1. Therefore, when the rotation of the vane pump 10 stops due to the stop of the engine 1, the discharge oil in the external pump 40 is supplied to the vane back pressure chamber 14A of the vane pump 10, which prevents the vane 15 from being pulled into the vane groove 14.

FIG. 3A illustrates the example of the present invention in which the oil pressure in the external pump 40 is supplied to the vane back pressure chamber 14A of the vane pump 10, and the leading end of the vane 15 projecting from the vane groove 14 is pressed in against the inner peripheral cam surface of the cam ring 20. FIG. 3B illustrates the case of the conventional example in which the hydraulic fluid is not supplied to the vane back pressure chamber 14A of the vane pump 10, so that the vane 15 is pulled into the vane groove 14 by its own weight.

The structure according to the present invention can prevent the hydraulic fluid supplied to the vane back pressure chamber 14A from leaking out from the discharge port 25 and can prevent the hydraulic fluid sucked into the pump chamber 21 from leaking out from the suction port 22 or the discharge port 25. Since there is no chance that there is no hydraulic fluid in the vane back pressure chamber 14A and the pump chamber 21 during the stop of the vane pump 10, the self-priming performance of the hydraulic fluid to the pump chamber 21 and the discharge response of the hydraulic fluid from the pump chamber 21 can be enhanced, when the vane pump 10 is restarted, i.e., when the engine 1 is again started.
(b) The discharge oil from the external pump 40 can be supplied to the discharge pipe line 4 of the vane pump 10 through the one-way valve 42. Therefore, the discharge oil of the vane pump 10 is not fed to the external pump 40 during the rotation of the vane pump 10, whereby the discharge flow rate performance of the vane pump 10 is not deteriorated.

The external pump used in the present invention may be used as an oil pressure source that supplies oil pressure to the CVT 2 or the like of the vehicle during the stop of the vane pump 10 caused by the stop of the engine 1.

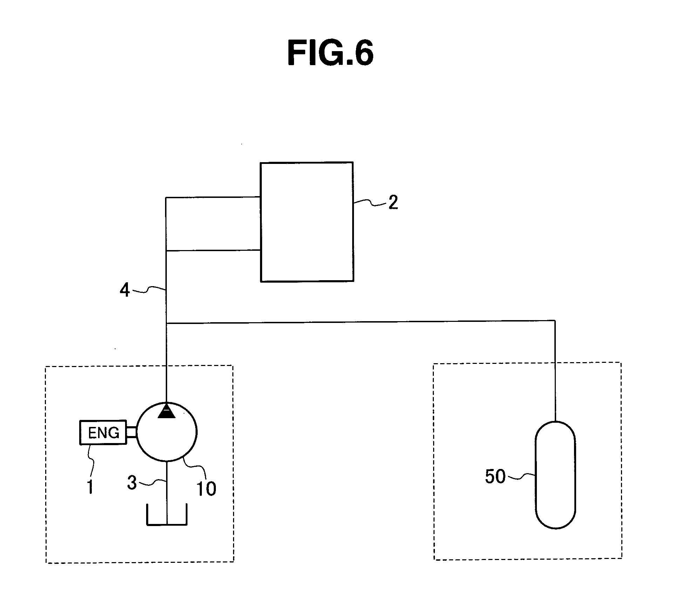

FIG. 6 illustrates a second embodiment of a vehicle hydraulic control unit according to the present invention. The different point of the second embodiment from the first embodiment in FIG. 1 is such that an accumulator 50 is used as an external oil pressure supplying apparatus. The accumulator 50 is connected so as to always communicate with the discharge pipe line 4 connected to the discharge opening 28 of the vane pump 10. Pressure is accumulated in the accumulator 50 by the discharge oil of the vane pump 10 driven by the engine 1.

Specifically, in the hydraulic control unit illustrated in FIG. 6, when a vehicle temporarily stops and the rotation of the engine 1 stops, the rotation of the vane pump 10 driven by the engine 1 also stops, whereby discharge of the hydraulic fluid is discontinued. When the temporal stop of the vehicle, the stop of the rotation of the engine 1, the stop of the rotation of the vane pump 10, or the reduction in the discharge oil pressure of the vane pump 10, is caused, the hydraulic fluid accumulated in the accumulator 50 is naturally supplied to the discharge pipe line 4 of the vane pump 10 as well as the high-pressure chamber 26 and the discharge port 25 of the vane pump 10, and further, is supplied to the vane back pressure supplying port 29 and the vane back pressure chamber 14A.

Accordingly, the operation and effect described below can be provided by the present embodiment.
(a) In the vehicle hydraulic control unit using the vane pump 10 driven by the engine 1, the oil, which has already been accumulated in the accumulator 50, can naturally be supplied to the discharge port 25 of the vane pump 10 during the stop of the engine 1. Therefore, when the rotation of the vane pump 10 stops due to the stop of the engine 1, the oil, which has already been accumulated in the accumulator 50, is naturally supplied to the vane back pressure chamber 14A of the vane pump 10, which prevents the vane 15 from being pulled into the vane groove 14.

The structure according to the present invention can prevent the hydraulic fluid supplied to the vane back pressure chamber 14A from leaking out from the discharge port 25 and can prevent the hydraulic fluid sucked into the pump chamber 21 from leaking out from the suction port 22 or the discharge port 25. Since there is no chance that there is no hydraulic fluid in the vane back pressure chamber 14A and the pump chamber 21 during the stoppage of the vane pump 10, the self-priming performance of the hydraulic fluid to the pump chamber 21 and the discharge response of the hydraulic fluid from the pump chamber 21 can be enhanced, when the vane pump 10 is restarted, i.e., when the engine 1 is again started.

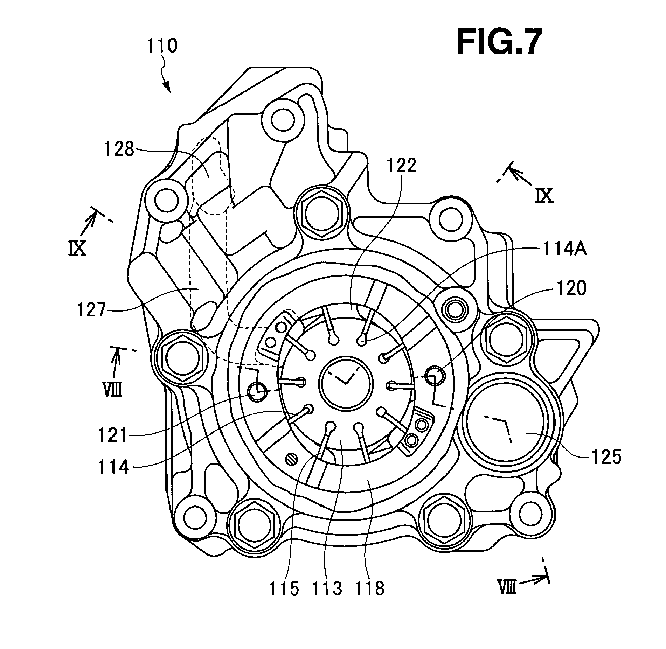

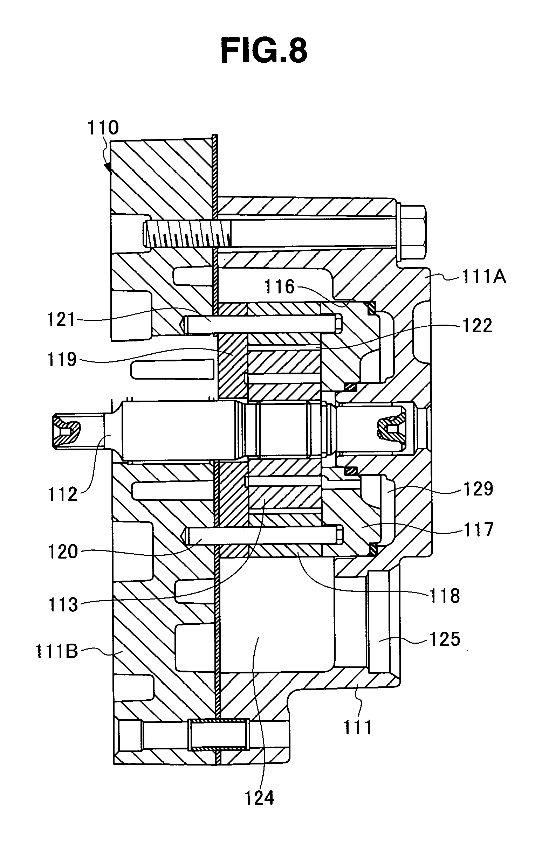

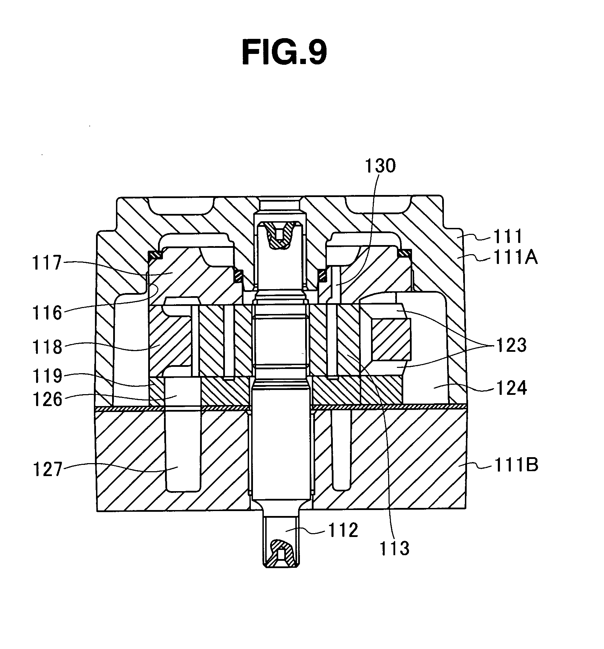

The vane pump to which the present invention is applied can be a fixed capacity type vane pump 110. A vane pump 110 includes, as illustrated in FIGS. 7 to 9, for example, a rotor 113 that is fixed to a pump shaft 112, which is inserted into a pump casing 111, by a serration to be rotated. The pump shaft 112 is directly driven to rotate by the engine 1. The rotor 113 accommodates vanes 115, which can protrude into or retract from a great number of vane grooves 114 that are radially formed at many respective positions in the circumferential direction of the rotor 113, wherein the rotor 113 can move each vane 115 in the radial direction along the vane grooves 114. A side plate 117, a cam ring 118, and a side plate outer 119 are fitted in a fitting hole 116 of a pump housing 111A of the pump casing 111 in a laminated state. They are positioned in the circumferential direction by positioning pins 120 and 121, and fixed and held by a housing plate 111 B from the side.

The cam ring 118 encloses the rotor 113 and the vanes 115, thereby forming a pump chamber 122 between the outer periphery of the rotor 113 and the adjacent vanes 115 between the side plate 117 and the side plate outer 119. A suction port 123 formed on the cam ring 118 is open to the suction region at the upstream side of the pump chamber 122 in the rotating direction of the rotor. The suction port 123 is allowed to communicate with the suction opening 125 of the pump 110 through a suction passage 124 formed in the housing 111A. On the other hand, the discharge port 126 formed on the side plate outer 119 is open to the discharge region at the downstream side of the pump chamber 122 in the rotor-rotating direction. The discharge port 126 is allowed to communicate with the discharge opening 128 of the pump 110 through a discharge passage 127 provided in the housing plate 111 B.

The side plate 117 provided along one side of the cam ring 118 is provided with a vane back pressure supply port 130 that guides high-pressure discharge oil in the high-pressure chamber 129 to a vane back pressure chamber 114A in the vane groove 114 at the center of the rotor 113. Specifically, the side plate 117 is provided so as to communicate the discharge port 126 corresponding to the pump chamber 122 at the discharge side and the vane back pressure supplying port 130 corresponding to the center-side vane back pressure chamber 114A in the vane groove 114 with each other by the high-pressure chamber 129.

With this structure, in the vane pump 110, the rotor 113 is rotated by the engine 1. Each vane 115 rotates with the leading end thereof being pressed against the inner peripheral cam surface of the cam ring 118 due to the centrifugal force caused by the rotation of the rotor 113 and the back pressure supplied to the vane back pressure chamber 114A from the vane back pressure supplying port 130. In this case, at the upstream side of the pump chamber 122 in the rotating direction of the rotor, the volume formed between the adjacent vanes 115 and the cam ring 118 is increased with the rotation, whereby hydraulic fluid is sucked from the suction port 123. At the downstream side of the pump chamber 122 in the rotating direction of the rotor, the volume formed between the adjacent vanes 115 and the cam ring 118 is decreased with the rotation, whereby the hydraulic fluid is discharged from the discharge port 126.

The pump shaft 112, the rotor 113, the vane groove 114, the vane back pressure chamber 114A, the vane 115, the cam ring 118, the pump chamber 122, the suction port 123, the discharge port 126, the discharge opening 128, and the vane back pressure supplying port 130 in the vane pump 110 respectively correspond to the pump shaft 12, the rotor 13, the vane groove14, the vane back pressure chamber 14A, the vane 15, the cam ring 20, the pump chamber 21, the suction port 22, the discharge port 25, the discharge opening 28, and the vane back pressure supplying port 29 in the vane pump 10 described above. Accordingly, since the external pump 40 in the first embodiment or the accumulator 50 in the second embodiment described above is connected to the discharge pipe line 4 connected to the discharge opening 128 of the vane pump 110, an operation and effect which is the same or similar as those in the first embodiment or the second embodiment can be provided.

As heretofore explained, embodiments of the present invention have been described in detail with reference to the drawings. However, the specific configurations of the present invention are not limited to the illustrated embodiments but those having a modification of the design within the range of the presently claimed invention are also included in the present invention.

The present invention can supply discharge oil in an external oil pressure supplying apparatus to a vane back pressure chamber of a vane pump during stoppage of an engine, in a vehicle hydraulic control unit. This structure can prevent the vane from being pulled into a vane groove during stoppage of the vane pump that is driven by the engine, in the vehicle hydraulic control unit.

Although the invention has been illustrated and described with respect to several exemplary embodiments thereof, it should be understood by those skilled in the art that the foregoing and various other changes, omissions and additions may be made to the present invention without departing from the spirit and scope thereof. Therefore, the present invention should not be understood as limited to the specific embodiment set out above, but should be understood to include all possible embodiments which can be encompassed within a scope of equivalents thereof with respect to the features set out in the appended claims.

## Claims

1. A vehicle hydraulic control unit comprising:
a vane pump driven by an engine,
the vane pump accommodates vanes in many vane grooves, which are radially arranged on a rotor provided to a pump shaft, so as to be capable of protruding to or retracting from the vane grooves, a cam ring surrounds the rotor and the vanes to define a pump chamber, and discharge oil from the pump chamber is supplied to a center-side vane back pressure chamber in the vane groove, wherein
discharge oil from an external oil pressure supplying apparatus can be supplied to the vane back pressure chamber of the vane pump during stoppage of the engine.

2. A vehicle hydraulic control unit comprising:
a vane pump driven by an engine,
the vane pump accommodates vanes in many vane grooves, which are radially arranged on a rotor provided to a pump shaft, so as to be capable of protruding to or retracting from the vane grooves, a cam ring surrounds the rotor and the vanes to define a pump chamber, and a side plate provided along the cam ring communicates a discharge port corresponding to a discharge-side pump chamber and a vane back pressure supplying port corresponding to a center-side vane back pressure chamber in the vane groove, wherein
discharge oil from an external oil pressure supplying apparatus can be supplied to the discharge port of the vane pump during stoppage of the engine.

3. A vehicle hydraulic control unit according to claim 2, wherein
the external oil pressure supplying apparatus includes an external pump, and the discharge oil from the external pump can be supplied to a discharge pipe line of the vane pump through a one-way valve.

4. A vehicle hydraulic control unit according to claim 1 or 2, wherein
the external oil pressure supplying apparatus includes an accumulator in which pressure is accumulated by the discharge oil of the vane pump.

5. A vehicle hydraulic control unit according to claim 3, wherein
the external pump is driven by an electric motor, and the discharge oil from the external pump is supplied to a discharge pipe line of the vane pump through a check valve serving as a one-way valve.

6. A vehicle hydraulic control unit according to claim 4, wherein
the hydraulic fluid accumulated in the accumulator is supplied to the vane back pressure chamber, when at least one of a temporal stoppage of a vehicle, a stoppage of the rotation of the engine, a stoppage of the rotation of the vane pump, or reduction in the discharge oil pressure of the vane pump occurs.

7. A vehicle hydraulic control unit according to claim 5, wherein
the electric motor is driven when at least one of a temporal stoppage of a vehicle, a stoppage of the rotation of the engine, a stoppage of the rotation of the vane pump, or reduction in the discharge oil pressure of the vane pump is detected.
